# EUROPEAN PATENT SPECIFICATION

(11) **EP 2 597 900 B1**
(45) Date of publication and mention of the grant of the patent: **15.04.2015**
(21) Application number: 10854910.6
(22) Date of filing: 29.09.2010
(51) Int. Cl.: H04W 12/06, H04W 76/02, H04W 88/02, H04W 88/06, H04W 84/12, H04L 29/06, H04W 4/00, H04W 8/18, H04W 48/18, G06F 9/54

(54) **MOBILE TERMINAL AND METHOD FOR ACCESSING A NETWORK**
MOBILES ENDGERÄT UND VERFAHREN FÜR DEN NETZWERKZUGANG
TERMINAL MOBILE ET PROCÉDÉ D'ACCÈS AU RÉSEAU

(30) Priority: 21.07.2010 CN 201010238756
(43) Date of publication of application: 29.05.2013
(73) Proprietor: ZTE Corporation, Shenzhen, Guangdong 518057 (CN)
(72) Inventor: YANG, Feng, Guangdong 518057 (CN)
(74) Representative: D'Halleweyn, Nele Veerle Trees Gertrudis
(86) International application number: PCT/CN2010/077489
(87) International publication number: WO 2012/009880

(56) References cited:
- WO-A1-2005/024632
- CN-A- 1 523 923
- CN-A- 1 937 632
- CN-A- 101 217 805
- US-A1- 2003 139 180
- US-A1- 2006 046 693

## Description

The present invention relates to the mobile communication technology field, and in particular to a mobile terminal and a method for accessing a network by a mobile terminal.

There are various authentication methods for access a wireless fidelity (Wifi) network by a mobile terminal; and an eap-SIM (AKA) (extensible authentication protocol is an extension authentication mechanism in combination with a global system for mobile communication (GSM) network subscriber identity module (SIM) (USIM) card) is a new authentication method based on the SIM (USIM). Currently, the most commonly used authentication method are credential exchange and password authentication, which are not bond with the SIM (USIM) card to perform authentication; therefore, after having accessed the Wifi network, the mobile terminal cannot use the eap-SIM (AKA) authentication method to charge the mobile terminal but uses the above credential exchange and password authentication solutions to charge the mobile terminal; and especially when charging an Android mobile terminal, it needs to re-allocate a username and a password, which will waste system resources, and the use of the mobile terminal is inconvenient.

US 2003/139180 discloses a communication system and method for coupling a wireless local area network (WLAN) to a public network to enable communication between User Equipment terminals (UEs) associated with the WLAN and the public network.

WO 2005/024632 discloses a method for providing an application access to a smart card (SC) including the steps of: providing a card reader device for receiving the smart card, providing a computer for running the application, associating with the card reader device a processing unit incorporating a second portion of smart card middleware, and providing a network ensuring communication between the first portion and the second portion of the smart card middleware.

US 2006/0046693 discloses a method, a Wireless Local Area Network (WLAN) client, and a WLAN Service Node (WSN) that allows an Extensible Authentication Protocol-Subscriber Information module (EAP-SIM) module of the WLAN client, which module may be wither downloaded from-the Internet of pre-installed in the WLAN client, to extract user credentials from a Subscriber Information Module (SIM) card, and to package the credentials into the EAP-SIM format and further into the TCP/IP format, before sending them to the WSN via a serving Access Point (AP).

US 2003/139180, WO 2005/024632, and US 2006/046693 provide respective technical solutions; however, the above mentioned problem still remains unsolved.

The technical problem to be solved by the present invention is to provide a mobile terminal supporting an eap-SIM (AKA) authentication function and a method for accessing a network by a mobile terminal.

This problem is solved by the mobile terminal of claim 1 and the method of claim 6.

In order to solve the above technical problem, the embodiments of the present invention provide a mobile terminal having an operating system, and the mobile terminal comprises:
a loading unit adapted to load a dynamic library of an interface using a remote processing calling (RPC) protocol in the operating system;
an acquiring unit adapted to invoke the dynamic library and acquire an authorization data based on a subscriber identification module; and
an accessing unit adapted to send the authorization data to an authentication server and access a wireless fidelity (Wifi) network after the authentication to the authorization data by the authentication server is successful.

In this case, the interface using a remote processing calling (RPC) protocol comprises:
a first RPC interface corresponding to an international mobile subscriber identity (IMSI) of a subscriber identity module (SIM) or USIM card of the mobile terminal; and a second RPC interface corresponding to the authorization data of the SIM or USIM card;
the acquiring unit comprises:
   a first acquiring subunit adapted to parse a callback function data of the first RPC interface to obtain the IMSI, and transfer the IMSI to the second RPC interface; and
   a second acquiring subunit adapted to parse a callback function data of the second RPC interface to obtain the authorization data.

In this case, the first acquiring subunit is adapted to parse the callback function data of the first RPC interface to obtain the IMSI according to a 3rd generation partnership project (3GPP) 2 communication protocol specification; and
the second acquiring subunit is adapted to parse the callback function data of the second RPC interface to obtain the authorization data according to the 3GPP2 communication protocol specification.

In this case, the callback function data of the second RPC interface comprises: the authorization data generated according to the IMSI and a random number sent by the authentication server.

In this case, the operating system is an Android operating system.

In this case, the above mobile terminal also comprises:
a starting unit adapted to generate a start instruction according to an extension authentication mechanism selected in a network application menu and combined with the SIM or the USIM card in the mobile terminal; and
the acquiring module adapted to invoke the dynamic library to acquire the authorization data based on the subscriber identification module according to the start instruction.

The present invention also provides a method for accessing a network by a mobile terminal, and the method comprises:
loading a dynamic library of an interface using a remote processing calling (RPC) protocol in an operating system of a mobile terminal;
invoking the dynamic library to acquire an authorization data based on a subscriber identification module of the mobile terminal; and
sending the authorization data to an authentication server, and the mobile terminal accessing a Wifi network after the authentication to the authorization data by the authentication server is successful.

In this case, the interface using a remote processing calling (RPC) comprises:
a first RPC interface corresponding to an international mobile subscriber identity IMSI of an SIM or a USIM card of the mobile terminal; and a second RPC interface corresponding to the authorization data of the SIM or USIM card;
the step of invoking the dynamic library to acquire an authorization data based on a subscriber identification module of the mobile terminal comprises:
   parsing a callback function data of the first RPC interface to obtain the IMSI, and transferring the IMSI to the second RPC interface; and
   parsing a callback function data of the second RPC interface to obtain the authorization data.

In this case, the callback function data of the second RPC interface comprises: the authorization data generated according to the IMSI and a random number sent by the authentication server.

In this case, before invoking the dynamic library to acquire an authorization data based on a subscriber identification module of the mobile terminal, the method further comprises:
generating a start instruction according to an extension authentication mechanism selected in a network application menu and combined with the SIM or USIM card in the mobile terminal;
the step of invoking the dynamic library to acquire an authorization data based on a subscriber identification module of the mobile terminal comprises:
   invoking the dynamic library to acquire the authorization data based on the subscriber identification module of the mobile terminal according to the start instruction.

The beneficial effects of the above technical solutions of the present invention are as follows:
in the above solution, the dynamic library (this dynamic library achieves an eap protocol frame function) of the interface using a remote processing calling (RPC) protocol is loaded, and the dynamic library is invoked to acquire the authorization data based on the subscriber identification module (the SIM or USIM card). If this authorization data passes the authentication of an authentication server of a Wifi network, then this mobile terminal can access the Wifi network by such an authentication manner of extension authentication mechanism eap-SIM (AKA) in combination with the SIM or USIM card to make the mobile terminal to support the authentication mechanism based on the subscriber identification module, i.e. eap-SIM (AKA); and after having accessed the Wifi network by the mobile terminal, the operators can charge the mobile terminal by binding the mobile terminal and the SIM card together so that it does not need to re-allocate a username and a password, which saves system resources, and the use of the mobile terminal is more convenient.

### Brief Description of the Drawings

Fig. 1 is a flowchart of a method for accessing a network by a mobile terminal according to the present invention;
Fig. 2 is a flowchart of the particular implementation of the method shown in Fig. 1; and
Fig. 3 is a flowchart of the particular implementation of the method shown in Fig. 2 being applied in a mobile terminal.

### Detailed Description of the Embodiments

For better understanding of the technical problems to be solved by the present invention, the technical solutions and advantages of the present invention, it will be described in detail in conjunction with the accompanying drawings and embodiments hereinafter.

The present invention provides a mobile terminal supporting an eap-SIM (AKA) authentication function and a method for accessing a network by the mobile terminal regarding the problem in the prior art that the mobile terminal does not support the extension authentication mechanism eap-SIM (AKA) combined with the subscriber identity module (SIM) card.

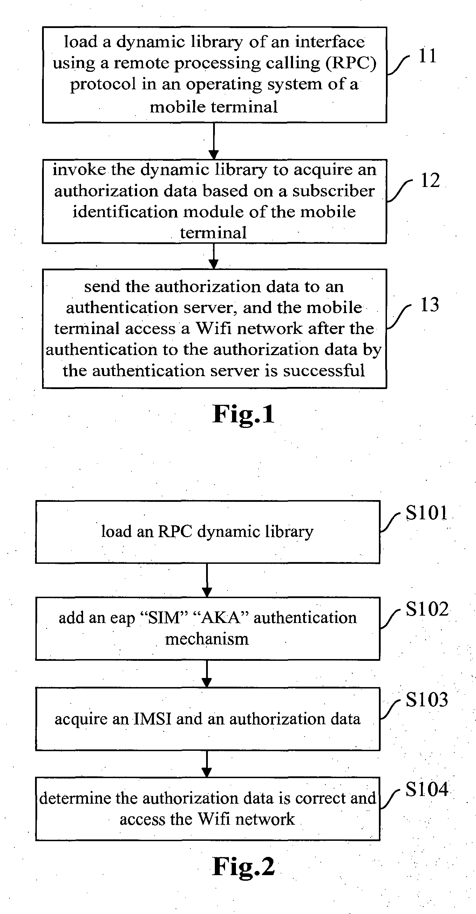

As shown in Fig. 1, the mobile terminal of the present invention has an operating system, and the mobile terminal comprises:
a loading unit adapted to load a dynamic library of an interface using a remote processing calling (RPC) protocol in the operating system;
an acquiring unit adapted to invoke the dynamic library and acquire an authorization data based on a subscriber identification module, wherein the subscriber identification module can be an SIM or a USIM or a user identity module (UIM), etc.; and
an accessing unit adapted to send the authorization data to an authentication server and access a wireless fidelity (Wifi) network after the authentication to the authorization data by the authentication server is successful.

The operating system of the mobile terminal in the present invention can be an Android system platform, however, this operating system is not limited to the Android system platform but can also be any other operating systems which have a dynamic library of an interface using the remote processing calling (RPC) protocol and having the capability of loading this dynamic library, wherein this dynamic library achieves the eap protocol frame function.

The above mobile terminal of the present invention loads a dynamic library (this dynamic library achieves the eap protocol frame function) of an interface using a remote processing calling (RPC) protocol in the operating system and invokes the dynamic library to acquire authorization data based on the subscriber identification module. If this authorization data passes the authentication of an authentication server of a Wifi network, then this mobile terminal can access the Wifi network by this authentication mode of extension authentication mechanism combined with the SIM or USIM card, and after having accessed the Wifi network by the mobile terminal, the operator can charge the mobile terminal by binding the mobile terminal and SIM card together, so that it does not need to re-allocate a username and a password, which saves system resources, and the use of mobile terminal is more convenient.

In this case, in the above embodiments of mobile terminal, interface using a remote processing calling (RPC) protocol comprises:
a first RPC interface corresponding to an international mobile subscriber identity (IMSI) of a subscriber identity module (SIM) of the mobile terminal; and a second RPC interface corresponding to the authorization data of the SIM or USIM card.

Correspondingly, the acquiring unit can comprise:
a first acquiring subunit adapted to parse a callback function data of the first RPC interface to obtain the IMSI, and transfer the IMSI to the second RPC interface; and
a second acquiring subunit adapted to parse a callback function data of the second RPC interface to obtain the authorization data.

In this case, the first acquiring subunit is adapted to parse the callback function data of the first RPC interface to obtain the IMSI according to a 3rd generation partnership project (3GPP) 2 communication protocol specification; and
the second acquiring subunit is adapted to parse the callback function data of the second RPC interface to obtain the authorization data according to the 3GPP2 communication protocol specification..

In this case, the callback function data of the second RPC interface includes: the authorization data generated according to the IMSI and a random number sent by the authentication server.

In another embodiment of the mobile terminal of the present invention, this mobile terminal can also comprise:
a starting unit adapted to generate a start instruction according to an extension authentication mechanism selected in a network application menu and combined with the SIM or the USIM card in the mobile terminal; and
the acquiring module adapted to invoke the dynamic library to acquire the authorization data based on the subscriber identification module according to the start instruction.

When this mobile terminal includes the starting unit, the whole implementing procedure is as follows:
1) a loading unit of the mobile terminal loads a dynamic library of an interface using a remote processing calling (RPC) protocol, and in particular, it is to load the dynamic library of the interface using the RPC protocol at an eap protocol layer, wherein, this interface using the RPC protocol includes: an IMSI RPC interface (i.e. the above first RPC interface) and an authorization RPC interface (i.e. the above second RPC interface);
2) an menu option of such an eap-SIM/AKA extension authentication mechanism which is combined with the SIM will be added in the network application menu of the mobile terminal to facilitate the user to select, and after selecting by the user, an eap-SIM/AKA authentication procedure will be initiated, and the eap-SIM/AKA authentication procedure includes:
3) parsing the callback function data of the IMSI RPC interface to obtain IMSI; in particular, the callback function data of the RPC interface is parsed according to the 3GPP 2 communication protocol specification to obtain the IMSI;
4) parsing the callback function data of an authorization RPC interface to obtain authorization data; wherein, this callback function includes this authorization data; and the generation process of this authorization data is: sending the IMSI generated in the above 3) to this authorization RPC interface and the callback function of this RPC interface generating this authorization data according to this IMSI and a random number sent by the authentication server; and
5) the mobile terminal sending this authorization data to a Wifi device in the Wifi network; the Wifi device sends the authorization data to the authentication server; and the authentication server checks whether this authorization data is correct, if yes, then the authentication is passed, the authentication server notifies the Wifi device and allows the mobile terminal to access the Wifi network.

In the above mobile terminal embodiments of the present invention, the mobile terminal can initiate the authentication based on the user identification module, i.e. the eap-SIM/AKA, correctly acquire the IMSI and authorization data of the SIM (USIM) card, and complete the access process of accesing a Wifi network according to this authorization data by loading a dynamic library of an interface using the RPC protocol of the Android system, and the mobile terminal can conveniently access the Wifi network of an operator by way of this eap-SIM/AKA authentication mode and does not nees to use additional username and password, which saves system resources; also, the operator can charge the mobile terminal by way of binging the mobile terminal and the SIM card together, which makes the use of the mobile terminal more convenient.

As shown in Fig. 1, the present invention also provides a method embodiment for accessing a network by a mobile terminal, and the method comprises:
step 11: loading a dynamic library of an interface using a remote processing calling (RPC) protocol in an operating system of a mobile terminal;
step 12: invoking the dynamic library to acquire an authorization data based on a subscriber identification module of the mobile terminal; and
step 13: sending the authorization data to an authentication server, and the mobile terminal accessing a Wifi network after the authentication to the authorization data by the authentication server is successful.

The embodiment of the method is suitable to all the mobile terminals the class of which is based on the Android platform, and of course also suitable to any mobile terminals with an operating system which has a dynamic library of an interface using a remote processing calling (RPC) protocol and having a loading capability, wherein this dynamic library achieves the eap protocol frame function.

This method also loads a dynamic library (this dynamic library achieves the eap protocol frame function) of an interface using a remote processing calling (RPC) protocol in the operating system and invokes the dynamic library to acquire authorization data based on the subscriber identification module (in particular is SIM card or USIM card), if this authorization data passes the authentication of an authentication server of a Wifi network, then this mobile terminal can access the Wifi network by this authentication mode of extension authentication mechanism combined with the SIM or USIM card, and after having accessed the Wifi network by the mobile terminal, the operator can charge the mobile terminal by manner of binding the mobile terminal and SIM card together, so that it does not need to re-allocate a username and a password, which saves system resources, and the use of mobile terminal is more convenient.

In the above method, the interface using a remote processing calling (RPC) comprises: a first RPC interface corresponding to an international mobile subscriber identity IMSI of an SIM or a USIM card of the mobile terminal; and a second RPC interface corresponding to the authorization data of the SIM or USIM card.

In this case, the step of invoking the dynamic library to acquire an authorization data based on a subscriber identification module of the mobile terminal comprises:
parsing a callback function data of the first RPC interface to obtain the IMSI, and transferring the IMSI to the second RPC interface; and
parsing a callback function data of the second RPC interface to obtain the authorization data.

Preferably, after the above step 11 and before step 12, the method can also comprise:
generating a start instruction according to an extension authentication mechanism selected in a network application menu and combined with the SIM or USIM card in the mobile terminal; and
correspondingly, the step 12 can comprise: invoking the dynamic library to acquire the authorization data based on the subscriber identification module of the mobile terminal according to the start instruction.

The particular implementing process of the above method will be described in conjunction with application examples hereinafter.

As shown in Fig. 2, the particular implementing process of the method of this mobile terminal accessing a Wifi network by way of the eap-SIM/AKA authentication includes:
step S101: pre-load the IMSI of the SIM (USIM) need to be invoked by an app (eap protocol) layer and a dynamic library associated with an RPC interface corresponding to an authorization, in which the dynamic library is in an Android system and associated with the RPC interface, and an associated dynamic library is needed to be loaded when using the RPC interface;
step S102: the Android system achieves an eap protocol frame function, adds corresponding strings "SIM" and "AKA" of the the eap-SIM/AKA into the currently available eap frame authentication method, so that the user can see the corresponding eap-SIM/AKA authentication mode in an application initiated to access the Wifi and the eap-SIM/AKA authentication can be initiated immediately after selecting the mode;
step S103: since the corresponding dynamic library of the RPC interface is pre-loaded, an IMSI RPC interface and an SIM (USIM) authorization RPC interface are invoked, a IMSI RPC interface callback function data is parsed according to 3Gpp2 (communication) protocol specification to obtain an IMSI data; an SIM (USIM) authorization data is obtained according to the authorization RPC interface callback data (which in particular can be: transferring the IMSI data to the authorization RPC interface and the authorization RPC interface generates the authorization data according to the parameter IMSI and the random number NAND sent by an authentication, authorization and accounting (AAA) server); and
step S104: the mobile terminal transfers the SIM (USIM) authorization data to a Wifi device by an Android eap frame protocol; the Wifi device sends the authorization data to a background (AAA) authentication server; and the authentication server checks the authorization data, if it is correct, then notifies the Wifi device, and the Wifi notifies the mobile terminal that it can access the Wifi network after having received a message that the authentication of the authentication server is successful.

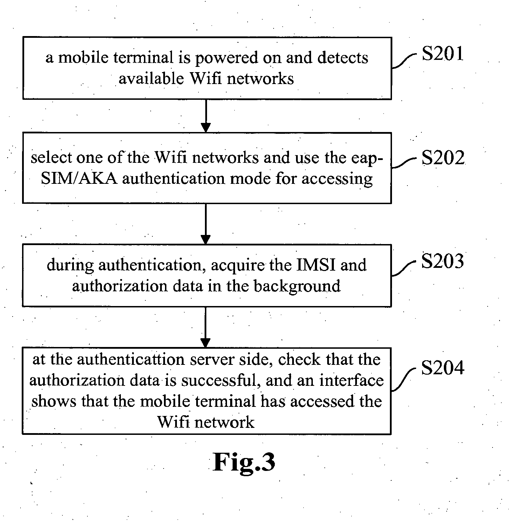

As shown in Fig. 3, it is a particular application procedure of the above procedure shown in Fig. 2 on the mobile terminal, which includes:
step S201: the IMSI of the SIM (USIM) which the app (eap protocol) layer needs to invoked and tge dynamic library associated with the authorization RPC interface corresponding to the authorization are loaded into the mobile terminal during compiling, and the mobile terminal detects that there is an available Wifi network after powering on;
step S202: the user selects the already searched Wifi network and selects "SIM" and "AKA" in the authentication modes of the application menu to initiate eap-SIM/AKA authentication mode, so as to access the Wifi network;
step S203: the eap-SIM/AKA authentication depends on the IMSI of the SIM (USIM) and the authorization data, the background invokes the IMSI and SIM (USIM) authorization RPC interface, then parses the data brought back by its callback function according to the 3GPP2 (communication) protocol specification to obtain the IMSI data, and obtains the SIM (USIM) authorization data according to an RPC interface callback function and the IMSI data as well as a random number sent by the authentication server; and
step S204: the mobile terminal transfers the SIM (USIM) authorization data to the Wifi device by the Android eap frame protocol; the Wifi device sends the authorization data to the background (AAA) authentication server, and if the authentication server checks the authorization data is correct, then the authentication server notifies the Wifi device, and the Wifi device notifies the mobile terminal that it can access the Wifi network after having received a message that the authentication of the authentication server is successful, and the user can see a prompt that the Wifi network has been connected thereto.

By virtue of the above embodiments of the present invention, the user can initiate the eap-SIM (AKA) authentication on the Android platform of the mobile terminal and correctly acquires the IMSI and the authorization data of SIM (USIM) to complete the process of accessing the Wifi network, and the mobile terminal can conveniently access the Wifi network of an operator by way of this authentication mode and does not need to additionally input a username and a password; also, the SIM card charging system of the operator can charge conveniently and only needs to add the condition judgment of this eap-SIM/AKA authentication mode in the original SIM card charging system and then charges according to the original SIM card charging system mode.

The foregoing is only the preferred embodiments of the present invention, and it should be noted that several improvements and modifications can also be made by those skilled in the art without departing from the principles of the present invention, and these improvements and modifications shall also be viewed as the protection scope of the present invention.

## Claims

1. A mobile terminal having an operating system, **characterized by** comprising:
a loading unit adapted to load a dynamic library of an interface using a remote processing calling RPC protocol in the operating system;
an acquiring unit adapted to invoke the dynamic library and acquire authorization data based on a subscriber identification module; and
an accessing unit adapted to send the authorization data to an authentication server and access a wireless fidelity Wifi network after the authentication of the authorization data by the authentication server is successful;
wherein the interface using a remote processing calling RPC protocol comprises: a first RPC interface corresponding to an international mobile subscriber identity IMSI of a subscriber identity module SIM or universal subscriber identity module USIM card of the mobile terminal; and a second RPC interface corresponding to the authorization data of the SIM or USIM card;
the acquiring unit comprises:
a first acquiring subunit adapted to parse a callback function data of the first RPC interface to obtain the IMSI, and transfer the IMSI to the second RPC interface; and
a second acquiring subunit adapted to parse a callback function data of the second RPC interface to obtain the authorization data.

2. The mobile terminal according to Claim 1, **characterized in that** the first acquiring subunit is adapted to parse the callback function data of the first RPC interface to obtain the IMSI according to a 3rd generation partnership project 3GPP 2 communication protocol specification; and
the second acquiring subunit is adapted to parse the callback function data of the second RPC interface to obtain the authorization data according to the 3GPP2 communication protocol specification.

3. The mobile terminal according to Claim 1, **characterized in that** the callback function data of the second RPC interface comprises: the authorization data generated according to the IMSI and a random number sent by the authentication server.

4. The mobile terminal according to Claim 1, **characterized in that** the operating system is an Android operating system.

5. The mobile terminal according to any one of Claims 1 to 4, **characterized in that** the mobile terminal further comprises:
a starting unit adapted to generate a start instruction according to an extension authentication mechanism selected in a network application menu and combined with the SIM or the USIM card in the mobile terminal; and
the acquiring module adapted to invoke the dynamic library to acquire the authorization data based on the subscriber identification module according to the start instruction.

6. A method for accessing a network by a mobile terminal, **characterized by** comprising:
loading (11) a dynamic library of an interface using a remote processing calling RPC protocol in an operating system of a mobile terminal;
invoking (12) the dynamic library to acquire an authorization data based on a subscriber identification module of the mobile terminal; and
sending (13) the authorization data to an authentication server, and the mobile terminal accessing a Wifi network after the authentication to the authorization data by the authentication server is successful; wherein the interface using a remote processing calling RPC comprises:
a first RPC interface corresponding to an international mobile subscriber identity IMSI of an SIM or a USIM card of the mobile terminal; and a second RPC interface corresponding to the authorization data of the SIM or USIM card;
the step of invoking the dynamic library to acquire an authorization data based on a subscriber identification module of the mobile terminal comprises:
parsing (S103) a callback function data of the first RPC interface to obtain the IMSI, and transferring the IMSI to the second RPC interface; and
parsing (S103) a callback function data of the second RPC interface to obtain the authorization data.

7. The method according to Claim 6, **characterized in that** the callback function data of the second RPC interface comprises: the authorization data generated according to the IMSI and a random number sent by the authentication server.

8. The method according to any one of Claims 6 to 7, **characterized in that** before invoking the dynamic library to acquire authorization data based on a subscriber identification module of the mobile terminal, the method further comprises:
generating a start instruction according to an extension authentication mechanism selected in a network application menu and combined with the SIM or USIM card in the mobile terminal;
the step of invoking the dynamic library to acquire an authorization data based on a subscriber identification module of the mobile terminal comprises:
invoking the dynamic library to acquire the authorization data based on the subscriber identification module of the mobile terminal according to the start instruction.

## Patentansprüche

1. Mobiles Endgerät mit einem Betriebssystem, **dadurch gekennzeichnet, dass** es aufweist:
eine Ladeeinheit, die geeignet ist, eine dynamische Programmbibliothek einer Schnittstelle unter Verwendung eines Fernverarbeitungsaufruf-, RPC-, Protokolls in dem Betriebssystem zu laden;
eine Erfassungseinheit, die geeignet ist, die dynamische Programmbibliothek aufzurufen und basierend auf einem Teilnehmeridentifikationsmodul Berechtigungsdaten zu erfassen;
und
eine Zugangseinheit, die geeignet ist, die Berechtigungsdaten an einen Authentifizierungsserver zu senden und auf ein vertrauenswürdiges drahtloses, Wifi-,
Netzwerk zuzugreifen, nachdem die Authentifizierung der Authentifizierungsdaten durch den Authentifizierungsserver erfolgreich ist;
wobei die Schnittstelle unter Verwendung eines Fernverarbeitungsaufruf-, RPC-, Protokolls aufweist: eine erste RPC-Schnittstelle, die einer internationalen Mobilteilnehmeridentität IMSI einer Teilnehmeridentitätsmodul-, SIM-, oder universellen Teilnehmeridentitätsmodul-, USIM-, Karte des mobilen Endgeräts entspricht; und eine zweite RPC-Schnittstelle, die den Berechtigungsdaten der SIM- oder USIM-Karte entspricht;
wobei die Erfassungseinheit aufweist:
eine erste Erfassungsuntereinheit, die geeignet ist, Rüchruffunktionsdaten der ersten RPC-Schnittstelle syntaktisch zu analysieren, um die IMSI zu erhalten und die IMSI an die zweite RPC-Schnittstelle zu übertragen; und
eine zweite Erfassungsuntereinheit, die geeignet ist, Rüchruffunktionsdaten der zweiten RPC-Schnittstelle syntaktisch zu analysieren, um die Berechtigungsdaten zu erhalten.

2. Mobiles Endgerät nach Anspruch 1, **dadurch gekennzeichnet, dass** die erste Erfassungsuntereinheit geeignet ist, die Rückruffunktionsdaten der ersten RPC-Schnittstelle gemäß einer Kommunikationsprotokollspezifikation des Partnerschaftsprojekts der 3. Generation 3GPP syntaktisch zu analysieren, um die IMSI zu erhalten; und
die zweite Erfassungsuntereinheit geeignet ist, die Rückruffunktionsdaten der zweiten RPC-Schnittstelle gemäß einer 3GPP-Kommunikationsprotokollspezifikation syntaktisch zu analysieren, um die Berechtigungsdaten zu erhalten.

3. Mobiles Endgerät nach Anspruch 1, **dadurch gekennzeichnet, dass** die Rüchruffunktionsdaten der zweiten RPC-Schnittstelle aufweisen: die Berechtigungsdaten, die gemäß der IMSI und einer von dem Authentifizierungsserver gesendeten Zufallszahl erzeugt werden.

4. Mobiles Endgerät nach Anspruch 1, **dadurch gekennzeichnet, dass** das Betriebssystem ein Android-Betriebssystem ist.

5. Mobiles Endgerät nach einem der Ansprüche 1 bis 4, **dadurch gekennzeichnet, dass** das mobile Endgerät ferner aufweist:
eine Starteinheit, die geeignet ist, gemäß einem
Erweiterungsauthentifizierungsmechanismus, der in einem Netzwerkanwendungsmenü ausgewählt wird und mit der SIM- oder USIM-Karte in dem mobilen Endgerät verknüpft ist, eine Startanweisung zu erzeugen; und
das Erfassungsmodul, das geeignet ist, die dynamische Programmbibliothek aufzurufen, um basierend auf dem Teilnehmeridentifikationsmodul gemäß der Startanweisung die Berechtigungsdaten zu erfassen.

6. Verfahren für den Zugang zu einem Netzwerk durch ein mobiles Endgerät, **dadurch gekennzeichnet, dass** es aufweist:
Laden (11) einer dynamischen Programmbibliothek einer Schnittstelle unter Verwendung eines Fernverarbeitungsaufruf-, RPC-, Protokolls in einem Betriebssystem eines mobilen Endgeräts;
Aufrufen (12) der dynamischen Programmbibliothek, um basierend auf einem Teilnehmeridentifikationsmodul des mobilen Endgeräts Berechtigungsdaten zu erfassen;
und
Senden (13) der Berechtigungsdaten an einen Authentifizierungsserver und Zugreifen auf ein Wifi-Netzwerk durch das mobile Endgerät, nachdem die Authentifizierung der Authentifizierungsdaten durch den Authentifizierungsserver erfolgreich ist;
wobei die Schnittstelle unter Verwendung eines Fernverarbeitungsaufruf-, RPC-, Protokolls aufweist:
eine erste RPC-Schnittstelle, die einer internationalen Mobilteilnehmeridentität IMSI einer SIM- oder einer USIM-Karte des mobilen Endgeräts entspricht; und eine zweite RPC-Schnittstelle, die den Berechtigungsdaten der SIM- oder USIM-Karte entspricht;
wobei der Schritt des Aufrufens der dynamischen Programmbibliothek, um basierend auf einem Teilnehmeridentifikationsmodul des mobilen Endgeräts Berechtigungsdaten zu erfassen, aufweist:
syntaktisches Analysieren (S103) von Rüchruffunktionsdaten der ersten RPC-Schnittstelle, um die IMSI zu erhalten und die IMSI an die zweite RPC-Schnittstelle zu übertragen; und syntaktisches Analysieren (S103) von Rüchruffunktionsdaten der zweiten RPC-Schnittstelle, um die Berechtigungsdaten zu erhalten.

7. Verfahren nach Anspruch 6, **dadurch gekennzeichnet, dass** die Rückruffunktionsdaten der zweiten RPC-Schnittstelle aufweisen: die Berechtigungsdaten, die gemäß der IMSI und einer von dem Authentifizierungsserver gesendeten Zufallszahl erzeugt werden.

8. Verfahren nach einem der Ansprüche 6 bis 7, **dadurch gekennzeichnet, dass** das Verfahren vor dem Aufrufen der dynamischen Programmbibliothek, um basierend auf einem Teilnehmeridentifikationsmodul des mobilen Endgeräts Berechtigungsdaten zu erfassen, ferner aufweist:
Erzeugen einer Startanweisung gemäß einem Erweiterungsauthentifizierungsmechanismus, der in einem Netzwerkanwendungsmenü ausgewählt wird und mit der SIM- oder USIM-Karte in dem mobilen Endgerät verknüpft ist;
wobei der Schritt des Aufrufens der dynamischen Programmbibliothek, um basierend auf einem Teilnehmeridentifikationsmodul des mobilen Endgeräts Berechtigungsdaten zu erfassen, aufweist:
Aufrufen der dynamischen Programmbibliothek, um basierend auf dem Teilnehmeridentifikationsmodul des mobilen Endgeräts gemäß der Startanweisung die Berechtigungsdaten zu erfassen.

## Revendications

1. Terminal mobile présentant un système d'exploitation, **caractérisé par le fait qu'**il comprend :
une unité de chargement adaptée de façon à charger une bibliothèque dynamique d'une interface en utilisant un protocole d'appel de traitement à distance RPC dans le système d'exploitation ;
une unité d'acquisition adaptée de façon à appeler la bibliothèque dynamique et à acquérir des données d'autorisation sur la base d'un module d'identification d'abonné ; et
une unité d'accès adaptée de façon à envoyer les données d'autorisation à un serveur d'authentification, et à accéder à un réseau de fidélité sans fil Wifi une fois que l'authentification des données d'autorisation par le serveur d'authentification a été couronnée de succès ;
dans lequel l'interface qui utilise un protocole d'appel de traitement à distance RPC, comprend : une première interface RPC qui correspond à une identité internationale d'abonné mobile IMSI d'une carte de module d'identification d'abonné SIM, ou d'une carte de module d'identité d'abonné universelle USIM, du terminal mobile ; et une seconde interface RPC qui correspond aux données d'autorisation de la carte SIM ou de la carte USIM ;
l'unité d'acquisition comprend :
une première unité secondaire d'acquisition adaptée de façon à analyser les données de fonction de rappel de la première interface RPC de manière à obtenir l'IMSI, et à transférer l'IMSI à la seconde interface RPC ; et
une seconde unité secondaire d'acquisition adaptée de façon à analyser les données de fonction de rappel de la seconde interface RPC de manière à obtenir les données d'autorisation.

2. Terminal mobile selon la revendication 1, **caractérisé en ce que** :
la première unité secondaire d'acquisition est adaptée de façon à analyser les données de fonction de rappel de la première interface RPC de manière à obtenir l'IMSI selon les spécifications du protocole de communication du projet de partenariat de troisième génération, 3GPP 2 ; et
la seconde unité secondaire d'acquisition est adaptée de façon à analyser les données de fonction de rappel de la seconde interface RPC de manière à obtenir les données d'autorisation selon les spécifications du protocole de communication 3GPP 2.

3. Terminal mobile selon la revendication 1, **caractérisé en ce que** les données de fonction de rappel de la seconde interface RPC comprennent : les données d'autorisation générées selon l'IMSI et un nombre aléatoire envoyé par le serveur d'authentification.

4. Terminal mobile selon la revendication 1, **caractérisé en ce que** le système d'exploitation est un système d'exploitation Android.

5. Terminal mobile selon l'une quelconque des revendications 1 à 4, **caractérisé en ce que** le terminal mobile comprend en outre :
une unité de démarrage adaptée de façon à générer une instruction de démarrage selon un mécanisme d'authentification d'extension sélectionné dans un menu d'application réseau et combiné à la carte SIM ou à la carte USIM dans le terminal mobile ; et
le module d'acquisition adapté de façon à appeler la bibliothèque dynamique de manière à acquérir les données d'autorisation sur la base du module d'identification d'abonné selon l'instruction de démarrage.

6. Procédé destiné à accéder à un réseau à l'aide d'un terminal mobile, **caractérisé par le fait qu'**il comprend les étapes consistant à :
charger (11) une bibliothèque dynamique d'une interface en utilisant un protocole d'appel de traitement à distance RPC dans un système d'exploitation d'un terminal mobile ;
appeler (12) la bibliothèque dynamique de façon à acquérir des données d'autorisation sur la base d'un module d'identification d'abonné du terminal mobile ; et
envoyer (13) les données d'autorisation à un serveur d'authentification, et accéder, à l'aide du terminal mobile, à un réseau Wifi une fois que l'authentification des données d'autorisation par le serveur d'authentification a été couronnée de succès ;
dans lequel l'interface qui utilise un protocole d'appel de traitement à distance RPC, comprend :
une première interface RPC qui correspond à une identité d'abonné mobile internationale IMSI d'une carte SIM ou d'une carte USIM du terminal mobile ; et une seconde interface RPC qui correspond aux données d'autorisation de la carte SIM ou de la carte USIM ;
l'étape consistant à appeler la bibliothèque dynamique de façon à acquérir des données d'autorisation sur la base d'un module d'identification d'abonné du terminal mobile, comprend les étapes consistant à :
analyser (S103) des données de fonction de rappel de la première interface RPC de façon à obtenir l'IMSI, et transférer l'IMSI à la seconde interface RPC ; et
analyser (S103) les données de fonction de rappel de la seconde interface RPC de façon à obtenir les données d'autorisation.

7. Procédé selon la revendication 6, **caractérisé en ce que** les données de fonction de rappel de la seconde interface RPC comprennent : les données d'autorisation générées selon l'IMSI et un nombre aléatoire envoyé par le serveur d'authentification.

8. Procédé selon la revendication 6 ou la revendication 7, **caractérisé en ce que** le procédé comprend en outre, avant l'étape consistant à appeler la bibliothèque dynamique de façon à acquérir des données d'autorisation sur la base d'un module d'identification d'abonné du terminal mobile, une étape consistant à :
générer une instruction de démarrage selon un mécanisme d'authentification d'extension sélectionné dans un menu d'application réseau et combiné à la carte SIM ou à la carte USIM dans le terminal mobile ;
l'étape consistant à appeler la bibliothèque dynamique de façon à acquérir des données d'autorisation sur la base d'un module d'identification d'abonné du terminal mobile, comprend les étapes consistant à :
appeler la bibliothèque dynamique de façon à acquérir les données d'autorisation sur la base du module d'identification d'abonné du terminal mobile selon l'instruction de démarrage.
